# EUROPEAN PATENT SPECIFICATION

(11) **EP 2 572 572 B1**
(45) Date of publication and mention of the grant of the patent: **25.07.2018**
(21) Application number: 12182864.4
(22) Date of filing: 04.09.2012
(51) Int. Cl.: A01J 5/003, A01J 5/017, A01K 1/12

(54) **Milking device comprising a separation milk system**
Melkvorrichtung mit System zur Milchtrennung
Dispositif de traite de lait comprenant un système de séparation de lait

(30) Priority: 22.09.2011 NL 2007460
(43) Date of publication of application: 27.03.2013
(73) Proprietor: Lely Patent N.V., 3147 PB Maassluis (NL)
(72) Inventor: Van den Berg, Karel, 3147 PA Maassluis (NL)

(56) References cited:
- WO-A1-2009/120129
- WO-A1-2010/014002
- US-A- 6 050 219
- US-A- 6 098 570

## Description

The invention relates to a device for milking dairy animals, and to a method for milking dairy animals, in particular according to the preamble or Claim 1 and Claim 13, respectively.

A device of this type is for example disclosed in US 6,050,219

Milking devices with milking carousels are used in order to efficiently milk relatively large numbers of dairy animals. Such a milking device has a rotatable milking carousel with several milking stations which are distributed over the circumference of the milking carousel. Each milking station is provided with a set of milk cups which can be attached to the teats of a dairy animal situated in or at the milking station.

During use, the milking carousel rotates slowly. Dairy animals are guided towards or allowed into a milking station of the milking carousel in order to rotate along with the milking carousel, usually for a considerable part of a rotation.

During their stay on the carrousel, the dairy animals are milked and optionally fed. While the dairy animal is rotating, various steps of the milking process are being carried out in various sections. In a first step, the dairy animal is, for example, made ready for milking. This may comprise, for example, the cleaning and/or massaging/stimulating of the teats of the dairy animal. Thereafter, the actual milking of the dairy animal can be started. To this end, the one or more milk cups are attached to the teats of the dairy animal, for example by milkers or by means of a connecting robot. After the dairy animal has been milked, the milk cups can be uncoupled from the teats and be prepared for a subsequent milking operation. The milk which has been obtained is passed to a milk tank via a milk pipe system.

After the milking of the dairy animal has ended, the dairy animal may leave the milking carousel, after a possible after-treatment, so that the milking station becomes available for a new dairy animal to be milked.

On occasion, milk from a dairy animal may be unsuitable for consumption. This is for example the case with beestings, milk from dairy animals suffering from mastitis or milk from dairy animals which have been treated with antibiotics. It is not desirable to collect these different types of milk in the same milk tank. Mixing milk for consumption with the other types of milk may render the milk for consumption no longer suitable for consumption. Milk which is not to be mixed with milk for consumption will be referred to below as separation milk. A dairy animal whose milk has to be separated will be referred to as a dairy animal giving separation milk.

After milking a dairy animal giving separation milk, it is desirable and often compulsory to flush the milking system before milking a cow giving milk for consumption. Flushing the milking system takes a relatively long time. In addition, the flushing of the milking system requires large amounts of flushing liquid, for example clean water.

For discharging the separation milk, a valve, for example a three-way valve, is in this case required in each milking station in the milk pipe system in order to discharge the separation milk without it ending up in the milk tank. Providing additional valves and pipes in the milking system makes the milk pipe system complicated and expensive, in particular with milking carousels having a large number of milking stations, for example more than fifty.

It is an object of the invention to provide a milking device according to the preamble of Claim 1, by means of which separation milk from dairy animals which are milked in the milking device using a milking carousel can be separated in an efficient manner.

This object is achieved by the invention by means of a device for milking dairy animals according to Claim 1. The device according to the invention provides a separate separation milk system and the separation milk no longer has to enter the milk pipe system of the milking carousel between the milk cups and the milk tank at all. Also, no additional valves are required in order to discharge, if necessary, the separation milk from the milk pipe system. In this case, it is also not necessary to flush the milk pipe system after a cow whose milk has to be separated has been milked. A further advantage of the separation milk system according to the invention is that it is displaceable with respect to the milking carousel in order to cooperate with several milking stations. It is therefore not necessary to provide a separate separation milk system for each milking station. However, it is possible to provide, for example, two or more such separation milk systems, in which the number of separation milk systems is smaller than the number of milking stations, advantageously at most one tenth of this number. Thus, in almost all cases a total milking system is provided which can handle a large diversity of cases.

Advantageously, the displaceable part is at least displaceable along the outer circumference of the milking carousel between a location where the milk cups of the main milking system are connected, in particular a connecting robot, and a disconnecting location where the one or more milk cups are disconnected from the teats of a milked dairy animal after milking. It should be noted that said disconnecting location may be dynamic, depending on the milking process of the animal which is being milked at that point in time.

The control device ensures the automatic displacement of the displaceable part in such a manner that, for milking a dairy animal giving separation milk, the displaceable part is placed near the respective milking station, and during milking of the dairy animal giving separation milk, the displaceable part is moved along with the dairy animal which is situated in or at the milking station.

The control device is, for example, designed to emit a control signal by means of which a motor of the separation milk system is actuated, which motor is designed to displace the displaceable part. The motor may be arranged on the displaceable part or at another suitable location, for example on a guide along which the displaceable part moves.

The control device may be a central control device of the device or a separate control device. The control device may also be arranged in the separation milk system itself, for example in the displaceable part, and can then, for example, communicate with the central control device.

The control device may also drive other functions of the separation milk system, such as for example milking using the separation milk cups and attaching the separation milk cups to the teats of a dairy animal.

In an embodiment, the displaceable part is wheeled. A wheeled device is suitable for automatically driving its displacement. The wheeled device may be driven on a floor or a rail or other guide. The wheeled device will advantageously comprise wheels which make simple, but flexible control possible.

In an embodiment, the displaceable part is an autonomously movable vehicle. This means that the vehicle has its own driving means by means of which it can move, either with or without external control. By designing the displaceable part of the separation milk system as an autonomously moving vehicle, the displaceable part has a large degree of freedom with regard to moving with respect to the milking carousel. Very advantageously, the vehicle can propel itself freely across a two-dimensional surface. In this case, it is for example also possible for the displaceable part to move to a recharging station for recharging a battery which is provided thereon and/or a station for emptying a separation milk tank which is situated in the displaceable part. In such an embodiment, the entire separation milk system may advantageously be arranged in or on the displaceable part, that is to say the autonomously moving vehicle forms the entire separation milk system. It should be noted that the separation milk tank is in this case not considered.

If desired, the displaceable part may comprise a wall-following system by means of which the displaceable part can follow a wall which runs parallel to the circumference of the carrousel.

With regard to design details of such an autonomously movable vehicle, explicit reference is made to, for example, EP1695616, EP2059119 and EP1943897 which show autonomous vehicles for milking.

In an alternative embodiment, the displaceable part is arranged on a fixedly arranged guide, for example a guide rail, which guide extends over at least a part of the circumference of the carrousel. By providing a fixedly arranged guide, the displaceable part can be moved in a simple manner. It may be an elongate guide on which the displaceable part is moved to and fro or a closed circuit which runs partly along the circumference of the milking carousel in which the displaceable part moves along the guide in one direction. The last embodiment has the advantage that several displaceable parts which can be moved separately from one another may be provided on the guide, so that it is possible to milk several dairy animals giving separation milk by means of the separation milk system simultaneously without these having to wait for one another.

In an embodiment, the displaceable part of the separation milk system has a dedicated separation milk tank. In this dedicated separation milk tank, the separation milk of one or more dairy animals giving separation milk can be stored temporarily. The separation milk tank can then be emptied into another milk tank or into the sewer, depending on the type of separation milk. As a result of such a dedicated separation milk tank, a pipe between the displaceable part and a fixedly arranged milk tank or sewer drain is not necessary, but is an alternative. It should be noted that, in principle, it is not necessary, or at least not as often, to flush said separation milk tank.

In an alternative embodiment, the displaceable part of the separation milk system is connected, via a pipe, to one or more fixedly arranged milk tanks for separation milk and/or the sewer.

In an embodiment, the displaceable part has a connecting robot for milk cups. With this connecting robot, it is, for example, possible to attach the separation milk cups to the teats of a dairy animal giving separation milk which is situated at or in a milking station. It is also possible for the connecting robot to be designed to reattach the one or more milk cups or the one or more separation milk cups if these become detached from the teats of a dairy animal too soon. It is possible for the milk cups to become detached from the teats during the milking of a dairy animal, for example, if they have not been properly attached initially or if a dairy animal kicks against one or more milk cups of the teats. Such cases of detachment or incorrect attachment of the milk cups can be detected, for example, with a detection device provided on the device, such as a milk vacuum monitor which can emit an alarm signal. The control device can then send the displaceable part to the respective milking station for the follow-up action.

In such a case, it is advantageous to provide a connecting robot which can reattach the milk cups to the teats. As the milk cups become detached relatively often with dairy animals giving separation milk, it is advantageous to provide a connecting robot for reattaching the separation milk cups on the displaceable part. It is equally possible to use the displaceable part for reattaching the milk cups of the milk pipe system if the displaceable part is not being used at that point in time for milking a dairy animal giving separation milk.

In an embodiment, the device comprises a separate fixedly arranged main connecting robot for placing the one or more milk cups on one or more teats of a dairy animal which is situated in or at one of the several milking stations. In addition to an optional connecting robot on the displaceable part, it is also possible to provide a separate main connecting robot for attaching the milk cups to the teats of a dairy animal which is situated in or at a milking station. This main connecting robot may optionally also be configured for attaching the one or more separation milk cups.

Advantageously, the main connecting robot has a higher mean connecting speed than the connecting robot on the displaceable part. This may be ensured, for example, by one or more quicker robot arms which, for example, require a lot of power or by an improved and quicker detection system. Certainly the latter might, for example, be too expensive to provide more than once, in particular if there were to be several connecting robots on displaceable parts.

In an embodiment, the device comprises an animal data file and an identification system for identifying a dairy animal entering the milking carousel, in which the device is designed to decide, following identification of the dairy animal using the identification system, on the basis of data associated with the identified dairy animal whether to milk the dairy animal automatically using the main milking system or the separation milk system.

By means of such an identification system and data file, it is possible to determine whether the dairy animal which enters a certain milking station has to be milked by means of the main milking system in order to store the milk in a tank for milk for consumption or by means of the separation milk system in order to separate the milk. Once it is known which milking system is to be used to milk the dairy animal, the device can be actuated, for example by means of the control device, to attach the milk cups or separation milk cups, respectively, to the teats of the respective dairy animal.

Advantageously, the device furthermore comprises a separate premilking device and a premilk quality-assessment device which is designed to emit a premilk quality signal and in which the control device is designed to decide, on the basis of the premilk quality signal, to automatically milk the dairy animal using the main milking system or the separation milk system. The premilking device comprises, for example, a separate premilk cup which can be fitted on the separate teats by hand or, in particular, by means of a connecting robot and which can premilk the respective teat and can optionally also clean and/or stimulate the latter. The premilk obtained is then passed through the premilk quality-assessment device. This comprises, for example, a conductivity meter which is known per se, a colour determining sensor or a temperature sensor. If the quality signal determined by the device does not meet a certain, optionally animal-dependent, criterion, such as an excessive conductivity, the control device connected to the quality-assessment device may decide to separate the milk.

The invention furthermore relates to a method according to claim 13 for milking dairy animals using a milking device according to the invention, comprising the following steps;
- allowing or placing a dairy animal at or in a milking station;
- determining whether a dairy animal has to be milked using the main milking system or the separation milk system; and
- based on the outcome, milking the dairy animal using the main milking system or the separation milk system, respectively.

In an embodiment, if a dairy animal has to be milked using the separation milk system, the displaceable part is moved along during milking with the milking station in which or at which the dairy animal to be milked is situated. By moving the displaceable part along with the milking station, it is simple for the separation milk cups to remain attached to the teats of a dairy animal giving separation milk. After milking has finished and the separation milk cups have been detached from the teats, the displaceable part can be moved back to the initial position in order to milk another dairy animal giving separation milk there.

In particular, the step of determining whether a dairy animal has to be milked comprises determining the quality of the premilk, in which the dairy animal is milked using the separation milk system if the quality of the premilk does not meet a predetermined criterion. Thus, it is possible to dynamically determine whether the dairy animal has to be milked using the separation milk system and therefore the displaceable part has to be displaced or whether the normal procedure using the main milking system can be followed.

Alternatively or in addition, the step of determining whether a dairy animal has to be milked using the main milking system or the separation milk system comprises the step of identifying the dairy animal using an identification system. On the basis of the identification, it is possible to retrieve data pertaining to the dairy animal, such as an indication that the animal is sick, is being treated with antibiotics, delivers beestings, etc., and therefore has to be milked using the separation milk system.

In an embodiment, the method comprises reattaching the one or more milk cups or the one or more separation milk cups by means of a connecting robot of the displaceable part if it/they become detached from the teats of a dairy animal too soon.

The invention will be explained below with reference to a number of exemplary embodiments illustrated in the drawings, in which:
Fig. 1 shows a first embodiment of a milking device according to the invention;
Fig. 2 shows a second embodiment of a milking device according to the invention; and
Fig. 3 shows an embodiment of a displaceable part of a milking device according to the invention.

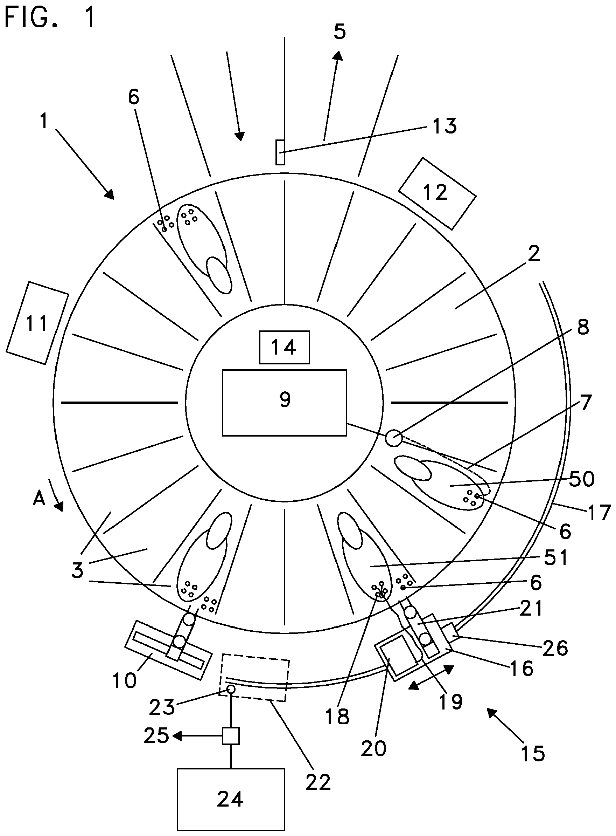

Fig. 1 shows a first embodiment of a device 1 according to the invention for milking dairy animals 50. The device 1 comprises a rotatable milking carousel 2 with several milking stations 3 which are distributed over the circumference of the milking carousel 2. The milking carousel 2 is a platform which slowly rotates in the direction indicated by the arrow A. Dairy animals 50 can enter a milking station 3 on the milking carousel via an entrance 4 and can leave the milking carousel 2 again via an exit 5. During the rotation of a milking station 3 from the entrance 4 to the exit 5, a dairy animal 50 which is situated in the milking station 3 can be milked.

It should be noted that only some dairy animals 50 are shown in the diagrammatic figures. In practice, the occupancy of a milking carousel may be much greater. In particular when milking takes place in batches, all stations will in principle be occupied. Alternatively, when cows are left to roam freely, as is the case with automatic robot milking, the occupancy will be lower and will vary. Nevertheless, the advantages of the invention can be applied with both methods of milking. In addition, the milking carousel may have a much greater number of milking stations than is shown in the figures.

Each milking station 3 is provided with a couple of milk cups 6 which can be attached to the teats of a dairy animal 50 which is situated at the milking station 3. By means of a milk pipe system 7, the milk cups 6 are connected to a first temporary tank 8 and then a tank 9 for milk for consumption which is intended for collecting milk for consumption.

A (main) connecting robot 10 is provided for attaching the milk cups 6 to the teats of a dairy animal 50. Furthermore, an (optional) pretreatment device 11 is provided for cleaning and/or massaging/stimulating the teats of the dairy animals prior to milking and an aftertreatment device 12 for the aftertreatment of the teats of the dairy animals after milking. It should be noted here, that details of (robot) milking carousels, such as a teat detection system and a rotation control system, which are known per se are not illustrated or explained in any more detail here, but are assumed to be part of the general knowledge of the person skilled in the art.

While a dairy animal 50 is rotating at a milking station 3 on the milking carousel 2, the various steps of the milking process are successively being carried out. In a first phase, the dairy animal is prepared to be milked. With the pretreatment device 11, the teats of a dairy animal 50 can be cleaned and/or massaged. After this preparation phase, which can also be carried out before the dairy animal 50 enters the milking carousel, milking can be started. To this end, the milk cups 6 are attached to the teats of the dairy animal. During milking, the milk is temporarily stored in the temporary in the temporary milk tank 8, such as a milk glass, via the milk pipe system 7 (pipe only shown for one milk cup). Subsequently, the milk is discharged further to the tank 9 for milk for consumption. If desired, it is also possible to discharge the milk directly to the tank 9 for milk for consumption.

After the dairy animal 50 has been milked, the milk cups 6 can be detached from the teats, for example by releasing the vacuum in the milk pipe system 7 which is used for milking, which is followed by the milk cups 6 dropping or by actively pulling the milk cups 6 off. After the milk cups 6 have been disconnected, and optionally after an aftertreatment by the optional aftertreatment device 12, the dairy animal 50 can leave the milking carousel 2 via the exit 5. Thereafter, a new dairy animal 50 can enter the same milking station 3 via the entrance 4.

The above-described device with a main milking system for milk for consumption offers a method of milking dairy animals which is efficient as such, in which the milk obtained is ultimately stored in a tank for milk for consumption. However, there are also dairy animals whose milk should not be used as milk for consumption, for example dairy animals which give beestings, dairy animals suffering from mastitis or dairy animals which are being treated with antibiotics. As this milk is not suitable for consumption, it will have to be collected in a different way. However, it may be desirable for these dairy animals giving separation milk to be milked in the milking carousel 2, for example in order to teach the dairy animals giving separation milk to be milked in the milking carousel 2 or in order not to adversely affect their milking behaviour by temporarily barring these dairy animals from the milking carousel 2.

In order to separate the separation milk, the device 1 comprises a separation milk system 15 which is designed to separate separation milk completely from the milk for consumption, so that the separation milk cannot mix with the milk for consumption. In addition, such a completely separated separation milk system 15 has the advantage that no separate valves are required in the milk pipe system 7 of the main milking system in order to discharge the separation milk from this system. In this case, the milk pipe system 7 of the main milking system does not have to be flushed separately after milking of a dairy animal 51 giving separation milk, as a result of which it is ready for a new dairy animal 50 on the respective milking station 3 more quickly.

The separation milk system 15 comprises a displaceable part, or trolley, 16 which is displaceably arranged on a guide rail 17 which extends along a part of the circumference of the milking carousel 2. This part of the circumference is essentially the area in which the dairy animals are milked, that is to say between the connecting robot 10 and the area where the milk cups 6 are detached from the teats of the dairy animals after milking has finished. As a result of this possible displacement with respect to the milking carousel 2, the separation milk system 15 is able to move with respect to the milking carousel, thus making cooperation with various milking stations 3 on the milking carousel possible. It is also possible to move the displaceable part along with the milking station 3, so that it can cooperate with the milking station 3 for the entire period in which a dairy animal giving separation milk is being milked. Due to the displaceable part 16 which can cooperate with the various milking stations 3, it is not necessary to provide a separate separation milk system 15 for each milking station 3.

The displaceable part 16 comprises a couple of separation milk cups 18 which can be attached to one or more teats of a dairy animal which is situated in or at the milking station 3. The separation milk cups 18 are connected to a separate separation milk pipe system 19 which connects the one or more separation milk cups 18 with a separation milk tank 20 which is also fitted in the displaceable part 16.

The displaceable part 16 furthermore comprises a connecting robot 21 for milk cups. This connecting robot 21 is designed to connect the separation milk cups 18 and, optionally, to attach the milk cups 6 of the main milking system to teats of dairy animals which are situated at a milking station 3. It should be noted that the separation milk cups 18 can also be attached to the teats of a dairy animal by the main connecting robot 10. This could result in a time saving for the connecting process. Nevertheless, the displaceable part and the moving along thereof will remain necessary in order to be able to provide the separation milk cups at the respective milking station.

The displaceable part 16 comprises a motor 26 for moving the displaceable part 16 along the guide rail 17.

As the displaceable part 16 is movable over the area in which the dairy animals are being milked and because the connecting robot 21 is designed to attach both the separation milk cups 18 and the milk cups 6, it is possible to use the separation milk system 15 for reattaching the separation milk cups 18/milk cups 6 if these become detached from the teats of a dairy animal too soon.

The fact is that it is possible that the milk cups become detached from the teats during the milking of a dairy animal, for example if these have not been properly attached initially or if a dairy animal kicks against one or more milk cups of the teats. It is desirable then to reattach the teats of the respective dairy animal to the main milking system or the separation milk system 15, respectively. As the main connecting robot 10 is in a fixed location, this cannot be used for reattaching the milk cups 6/separation milk cups 18. Using the connecting robot 21 of the separation milk system 15 for the reattachment prevents the dairy animals from having to travel on the milking carousel 2 for an additional rotation. In this case, it should be noted that it happens relatively often with dairy animals 51 giving separation milk that the milk cups (for separation milk) become detached too soon. As the displaceable part 15 moves along with a dairy animal giving separation milk during milking of the separation milk, the connecting robot 21 can be used immediately in order to reattach the separation milk cups 18 when the latter have been detached too soon. It should be noted that it is also possible for milk cups for milk for consumption drop onto the floor or become soiled in another way once they have been kicked off. In such a case, it is undesirable to continue the milking process after the milk cup(s) have been reattached without cleaning them. The invention can then provide a solution by sending the displaceable part to this dairy animal and by replacing at least the dropped milk cup by a milk cup for separation milk, so that hardly any milking time is lost. Also, the milk for consumption can thus not be contaminated with milk which is obtained later in case no cleaning takes place in between.

Fig. 1 shows the separation milk system 15 during the milking of a dairy animal 51 giving separation milk. The separation milk cups 18 are attached to the teats of the dairy animal 51 giving separation milk and the separation milk is taken to the separation milk tank 20 via the separation milk pipe system 19. During milking, the displaceable part 16 moves along with the milking station 3, so that the separation milk cups 18 remain securely attached to the teats of the dairy animal 51 giving separation milk. After milking, the separation milk cups 18 can be detached from the teats of the dairy animal 51 giving separation milk and be replaced onto a holder which is intended for this purpose and provided on the displaceable part 16 of the separation milk system 15.

When the separation milk cups 18 have been detached and the displaceable part 18 no longer has to cooperate with the respective milking station 3, the displaceable part 15 can be moved back to a starting position 22 near the main connecting robot 10 via the guide rail 17. This starting position 22 is denoted by a rectangle in Fig. 1. In this starting position 22, the separation milk system 15 can wait until another dairy animal giving separation milk appears at the entrance 4 of the milking carousel 2.

In order to be able to recognize that a dairy animal giving separation milk has appeared at the entrance 4, the device has an identification system 13, by means of which a dairy animal can be identified at the entrance, for example by means of a transponder which the dairy animal carries.

The device furthermore comprises a control device 14. The control device 14 is designed to automatically control the displacement of the displaceable part 16. To this end, the control device 14 passes a control signal to the motor 26 in order to move the displaceable part 16 along the guide rail 17.

The control device for carrying out this function can also be arranged in any other suitable location, for example in the displaceable part 15 itself.

In this embodiment, the control device 14 is furthermore designed to milk the dairy animal with either the main milking system or the separation milk system 15 on the basis of animal data obtained after the dairy animal has been identified using the identification system 13. At the starting position 22, there is a connection 23 for the discharge of separation milk from the separation milk tank 20. This separation milk can be selectively discharged from the separation milk tank 19 to either a larger separation milk tank 24 or to a sewer 25. It is also possible for the displaceable part 16 of the separation milk system 15 to be connected, via a pipe, to one or more milk tanks for separation milk and/or the sewer. The advantage of the illustrated arrangement of tanks is that the displaceable part 16 does not have to be connected continually with a fixedly arranged milk tank or sewer. Since the displaceable part 16 will return to the starting position 22 on a regular basis anyway, this position can be used to good effect for emptying the separation milk tank 20. It is of course also possible to use any other suitable position. In the starting position 22, or in another suitable position, the displaceable part 16 can also be connected to other facilities, such as a flushing installation for flushing, for example, the separation milk cups 18, the separation milk pipe system 19 and/or the separation milk tank 20, or a recharging station for recharging a battery which is situated in the displaceable part 16.

In order to be able to milk several dairy animals giving separation milk simultaneously, it is possible to provide several displaceable parts 16 of a separation milk system 15 on the guide rail 17. However, using the illustrated guide rail 17, it is not possible for a first displaceable part to return to a starting position close to the main connecting robot 10 before a second displaceable part has finished milking a dairy animal 51 giving separation milk, as the two displaceable parts cannot overtake each other. In an alternative embodiment, it is possible to provide a guide rail as a closed loop along which one or more displaceable parts 16 move in one direction. Then, it is indeed possible for the first displaceable part 16 to return to the starting position before the second displaceable part has finished milking a dairy animal giving separation milk.

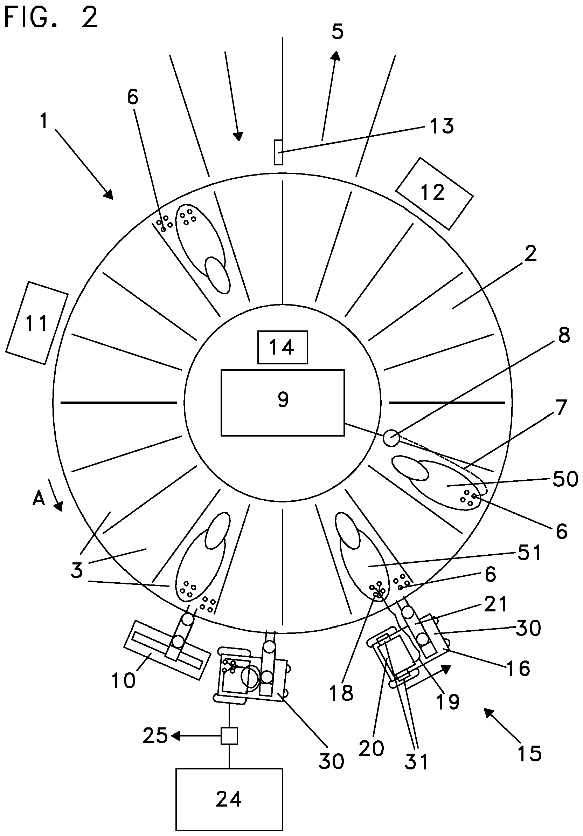

Fig. 2 shows an alternative embodiment of a device according to the invention. Similar parts or parts having an essentially identical function are denoted by the same reference numerals.

Here, the displaceable part 16 of the separation milk system 15 is designed as an autonomously moving vehicle 30. This vehicle 30 is free to move in at least two independent directions in a certain region, and designed to be driven by the control device 14, preferably wirelessly. The vehicle 30 comprises two wheel motors 31 for driving two wheels of the vehicle 30. The wheel motors 31 can be operated by means of a control signal from the control device 14 to move the vehicle along the desirable route. In this case, the control signal may also optionally be used to drive a motor by means of which the rotation position of two wheels of the vehicle which can be driven can be adjusted in order to move the vehicle along this route.

In the device 1 shown in Fig. 2, two such vehicles 30 are provided, so that two dairy animals giving separation milk can be milked simultaneously by means of the two vehicles 30. As the vehicles can move freely, the one vehicle 30 never has to wait for the other vehicle after finishing the milking of a dairy animal giving separation milk. In addition, a vehicle 30 can also drive past another vehicle should it be necessary to reattach the milk cups 6 to the teats of a dairy animal 50 if the milk cups have become detached too soon.

A further advantage of the freedom of movement of the vehicles 30 is that they can drive to a suitable location for certain functions, for example to a tank or sewer which is not situated directly next to the milking carousel in order to empty the separation milk tank 20 or to a recharging point for recharging a battery which is also not situated next to the milking carousel 2.

The vehicle 30 or another embodiment of the displaceable part 16 may be provided with a wall-following system, floorstrip-following system, GPS or the like in order to reach or remain at the correct position on the milking carousel 2 while following the movement of the milking carousel 2.

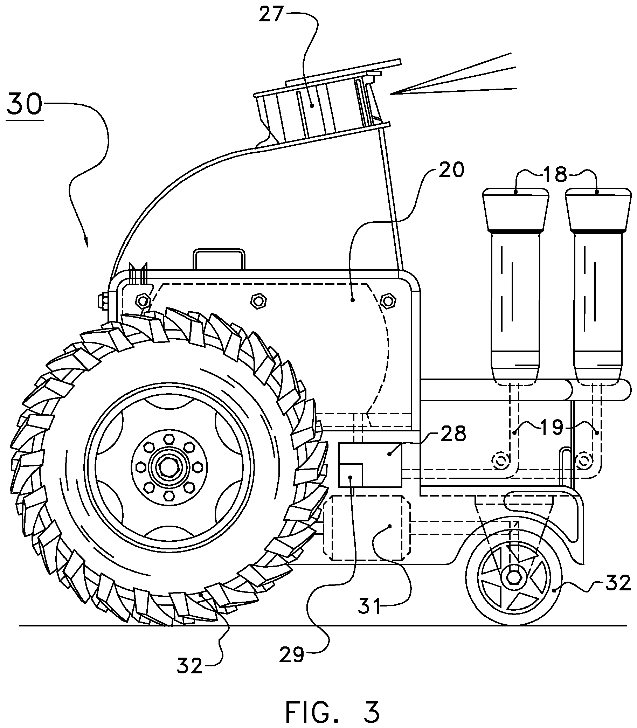

Fig. 3 shows an embodiment of a displaceable part 30 of a milking device according to the invention.

The part 30 is an autonomous vehicle with a teat-detecting system 27, a device 28 for assessing the quality of the premilk and a vehicle control device 29, as well as wheels 32 driven by the wheel motor 31.

The teat-detecting device 27 is known per se. However, it may be of a simpler design than a teat-detecting device of the main connecting robot 10. After all, there is more time for the vehicle 30 to connect teats, as it moves along with the milking station. Thus, a simpler and less expensive embodiment of such a teat-detecting device 27 can be selected.

Under the control of the teat-detecting device 27, the separation milk cups 18 can be attached by means of a robot arm (not shown here) in order then to gather milk, starting with premilk, using a milking device (also not shown) which provides a milking and pulsation vacuum. Via the separation milk pipe 19, this premilk passes into a device 28 for assessing the quality of the premilk, where it is assessed for one or more properties, such as conductivity and colour. The associated quality signal or, if desired, only one or more measurement values, can be processed in the vehicle control device 29. If one or more associated criteria are not met, the milk to be gathered is indeed separation milk. If however the criteria are met, the dairy animal may be milked using the standard milk cups 6 in a next round. It should be noted that such a quality control is advantageously provided for the standard milk cups, so that the quality of the milk of each dairy animal is being monitored. Nevertheless, it is possible to decide, on the basis of a measurement which has been carried out, to lift the separation for a dairy animal which has been separated. It is also possible to provide a separate premilk cup (not shown here) on the standard milk cups 6 for milk assessment, so that any milk to be separated does not come into contact with the milk for consumption.

Incidentally, the vehicle control device 29 can also control the wheel motor 31 for driving and/or controlling the wheels 32. If desired, the vehicle control device may be connected to the overall control unit 14 of the device.

The illustrated embodiments serve as non-limiting examples of the invention. The scope of protection is determined by the attached claims.

## Claims

1. Device (1) for milking dairy animals, comprising:
- a rotatable milking carousel (2) with several milking stations (3), in which each milking station has one or more milk cups (6),
- a main milking system for milking a dairy animal with the one or more milk cups, comprising a milk pipe system (7) which connects the one or more milk cups of each milking station with a tank (8, 9) for milk for consumption,
wherein the device comprises a separation milk system (15) for separating milk from one or more dairy animals, having a displaceable part (16) which is displaceable with respect to the milking carousel in order to be able to cooperate with several milking stations and to move along with one of the several milking stations while cooperating with said one of the several milking stations, in which the displaceable part comprises one or more separation milk cups (18), which can be attached to one or more teats of a dairy animal (51) which is situated in or at the milking station, and in which the separation milk system has a separate discharge system for separation milk (19), via which system milk from the one or more separation milk cups which is to be separated can be transported to a separation milk tank (20), and in which the device has a control device (14) which is configured to automatically control a displacement of the displaceable part,
**characterized in that** the device is configured to:
- allow or place a dairy animal (50, 51) at or in a milking station (3);
- determine whether a dairy animal has to be milked using the main milking system or the separation milk system (15); and
- based on the outcome, milk the dairy animal using the main milking system or the separation milk system, respectively.

2. Device (1) according to Claim 1, in which the displaceable part (16) is wheeled.

3. Device (1) according to Claim 2, in which the displaceable part (16) is an autonomously movable vehicle.

4. Device (1) according to one of the preceding claims, in which the separation milk system (15) comprises a motor (26) which can be driven by the control device (14), which motor is designed to displace the displaceable part (16).

5. Device (1) according to one of the preceding claims, in which the displaceable part (16) has a connecting robot (21) for milk cups.

6. Device (1) according to one of the preceding claims, in which the displaceable part (16) is arranged on a fixedly arranged guide (17), which guide extends over a part of the circumference of the carrousel (2).

7. Device (1) according to one of the preceding claims, in which the displaceable part (16) of the separation milk system (15) has a dedicated separation milk tank (20).

8. Device (1) according to one of the preceding claims, in which the displaceable part of the separation milk system (15) is connected to one or more stationary milk tanks for separation milk.

9. Device (1) according to one of the preceding claims, in which the device comprises a separate fixedly arranged main connecting robot (10) for placing the one or more milk cups (6, 18) on one or more teats of a dairy animal which is situated in or at one of the several milking stations.

10. Device (1) according to the preceding claim, in which the connecting robot (21) of the displaceable part (16) is designed to attach both the one or more separation milk cups (18) and the one or more milk cups (6) to the teats of a dairy animal which is situated in or at a milking station (3).

11. Device (1) according to one of the preceding claims, in which the device comprises an animal data file and an identification system (13) for identifying a dairy animal entering the milking carousel (2), and in which the device is designed to decide, following identification of the dairy animal using the identification system, on the basis of data associated with the identified dairy animal whether to milk the dairy animal automatically using the main milking system or the separation milk system (15).

12. Device according to one of the preceding claims, furthermore comprising a separate premilking device and a premilk quality-assessment device (28) which is designed to emit a premilk quality signal, and in which the control device (14) is designed to decide, on the basis of the premilk quality signal, to automatically milk the dairy animal using the main milking system or the separation milk system (15).

13. Method for milking dairy animals using a milking device according to one of the preceding claims, **characterized in that** the method comprises the steps:
- allowing or placing a dairy animal (50, 51) at or in a milking station (3);
- determining whether a dairy animal has to be milked using the main milking system or the separation milk system (15); and
- based on the outcome, milking the dairy animal using the main milking system or the separation milk system, respectively.

14. Method according to Claim 13, in which, if a dairy animal (50, 51) has to be milked using the separation milk system (15), the displaceable part (16) is automatically moved along during milking with the milking station (3) in which or at which the diary animal to be milked is situated.

15. Method according to Claim 13 or 14, in which the step of determining whether a dairy animal (50, 51) has to be milked using the main milking system or the separation milk system (15) comprises the step of identifying the dairy animal using an identification system (13).

16. Method according to one of Claims 13-15, in which the step of determining whether a dairy animal (50, 51) has to be milked comprises determining the quality of the premilk, in which the dairy animal is milked using the separation milk system (15) if the quality of the premilk does not meet a predetermined criterion.

17. Method according to one of Claims 13-16, in which the displaceable part (16) has a connecting robot (21) for milk cups (6, 18), and in which the method comprises reattaching the one or more milk cups (6) or the one or more separation milk cups (18) by means of the connecting robot of the displaceable part, if it/they become detached from the teats of a dairy animal (50, 51) too soon.

## Patentansprüche

1. Vorrichtung (1) zum Melken von Milchtieren, umfassend:
- ein drehbares Melkkarussell (2) mit mehreren Melkplätzen (3), wobei jeder Melkplatz einen oder mehrere Melkbecher (6)aufweist,
- ein Hauptmelksystem zum Melken eines Milchtiers mittels des einen oder der mehreren Melkbecher, umfassend ein Milchrohrleitungssystem (7), welches den einen oder die mehreren Melkbecher jedes Melkplatzes mit einem Tank (8, 9) für die zum Verzehr bestimmte Milch verbindet,
wobei die Vorrichtung ein Trennmelksystem (15) zur Trennung der Milch von einem oder mehreren Milchtieren umfasst, welches einen ortsveränderlichen Teil (16) aufweist, der relativ zum Melkkarussell ortsveränderlich ist, um mit mehreren Melkplätzen zusammenwirken zu können und während des Zusammenwirkens mit einem der mehreren Melkplätze zusammen mit dem einen der mehreren Melkplätze weiterbewegt werden zu können, wobei der ortsveränderliche Teil einen oder mehrere an eine oder mehrere Zitzen eines im oder am Melkplatz befindlichen Milchtiers (51) ansetzbare Trennmelkbecher (18) umfasst, und wobei das Trennmelksystem ein separates Ablaufsystem für Trennmilch (19) aufweist, wobei über das System zu trennende Milch von dem einen oder den mehreren Trennmelkbechern in einen Trennmilchtank (20) befördert werden kann, und wobei die Vorrichtung ein Steuergerät (14) aufweist, welches dazu ausgelegt ist, eine Ortsbewegung des ortsveränderlichen Teils automatisch zu steuern,
**dadurch gekennzeichnet, dass** die Vorrichtung dazu ausgelegt ist, um
- einem Milchtier (50, 51) Zugang zu einem Melkplatz (3) zu gewähren bzw. es an oder in diesem zu platzieren,
- zu bestimmen, ob ein Milchtier mit dem Hauptmelksystem oder dem Trennmelksystem (15) gemolken werden muss, und
- das Milchtier je nach dem Ergebnis mit dem Hauptmelksystem bzw. dem Trennmelksystem zu melken.

2. Vorrichtung (1) nach Anspruch 1, wobei der ortsveränderliche Teil (16) mit Rädern versehen ist.

3. Vorrichtung (1) nach Anspruch 2, wobei der ortsveränderliche Teil (16) ein autonom bewegliches Fahrzeug ist.

4. Vorrichtung (1) nach einem der vorgenannten Ansprüche, wobei das Trennmelksystem (15) einen Motor (26) umfasst, der durch das Steuergerät (14) angesteuert werden kann, wobei der Motor und dazu vorgesehen ist, den ortsveränderlichen Teil (16) von der Stelle zu bewegen.

5. Vorrichtung (1) nach einem der vorgenannten Ansprüche, wobei der ortsveränderliche Teil (16) einen Verbindungsroboter (21) für Melkbecher aufweist.

6. Vorrichtung (1) nach einem der vorgenannten Ansprüche, wobei der ortsveränderliche Teil (16) auf einer fest angebrachten Führungsschiene (17) angeordnet ist, wobei sich die Führungsschiene über einen Teil des Umfangs des Karussells (2) erstreckt.

7. Vorrichtung (1) nach einem der vorgenannten Ansprüche, wobei der ortsveränderliche Teil (16) des Trennmelksystems (15) einen speziell für die Trennmilch vorgesehenen Tank (20) aufweist.

8. Vorrichtung (1) nach einem der vorgenannten Ansprüche, wobei der ortsveränderliche Teil des Trennmelksystems (15) mit einem oder mehreren stationären Milchtanks für Trennmilch verbunden ist.

9. Vorrichtung (1) nach einem der vorgenannten Ansprüche, wobei die Vorrichtung einen separaten, fest angebrachten Hauptverbindungsroboter (10) zum Platzieren des einen oder der mehreren Melkbecher (6, 18) an eine oder mehrere Zitzen eines in oder an einem der mehreren Melkplätze befindlichen Milchtiers umfasst.

10. Vorrichtung (1) nach dem vorgenannten Anspruch, wobei der Verbindungsroboter (21) des ortsveränderlichen Teils (16) dafür ausgelegt ist, sowohl den einen oder die mehreren Trennmelkbecher (18) als auch den einen oder die mehreren Melkbecher (6) an die Zitzen eines in oder an einem Melkplatz (3) befindlichen Milchtiers anzusetzen.

11. Vorrichtung (1) nach einem der vorgenannten Ansprüche, wobei die Vorrichtung eine Datei der Tierdaten und ein Identifikationssystem (13) zur Identifizierung eines das Melkkarussell (2) betretenden Milchtiers umfasst und wobei die Vorrichtung dazu ausgelegt ist, nach der Identifizierung des Milchtiers mittels des Identifikationssystems, auf der Grundlage der zu dem identifizierten Milchtier gehörenden Daten zu entscheiden, ob das Milchtier automatisch mit dem Hauptmelksystem oder dem Trennmelksystem (15) gemolken werden soll.

12. Vorrichtung nach einem der vorgenannten Ansprüche, ferner umfassend eine separate Vormelkvorrichtung und eine Vormilch-Qualitätsprüfeinrichtung (28), welche dazu ausgelegt ist, ein Vormilch-Qualitätssignal auszugeben, und wobei das Steuergerät (14) dazu ausgelegt ist, auf der Grundlage des Vormilch-Qualitätssignals zu entscheiden, das Milchtier automatisch mit dem Hauptmelksystem oder mit dem Trennmelksystem (15) zu melken.

13. Verfahren zum Melken von Milchtieren mittels einer Melkvorrichtung nach einem der vorgenannten Ansprüche,
**dadurch gekennzeichnet, dass** das Verfahren die folgenden Schritte umfasst:
- einem Milchtier (50, 51) Zugang zu einem Melkplatz (3) gewähren bzw. es an oder in einem solchen platzieren,
- Bestimmen, ob ein Milchtier mit dem Hauptmelksystem oder dem Trennmelksystem (15) gemolken werden muss, und
- je nach dem Ergebnis Melken des Milchtier mit dem Hauptmelksystem bzw. dem Trennmelksystem.

14. Verfahren nach Anspruch 13, wobei, wenn ein Milchtier (50, 51) mit dem Trennmelksystem (15) gemolken werden muss, der ortsveränderliche Teil (16) während des Melkens automatisch zusammen mit dem Melkplatz (3) weiterbewegt wird, in oder an welchem sich das zu melkende Milchtier befindet.

15. Verfahren nach Anspruch 13 oder 14, wobei der Schritt des Bestimmens, ob ein Milchtier (50, 51) mit dem Hauptmelksystem oder dem Trennmelksystem (15) gemolken werden muss, den Schritt der Identifizierung des Milchtier mittels eines Identifikationssystems (13) umfasst.

16. Verfahren nach einem der Ansprüche 13 bis 15, wobei der Schritt des Bestimmens, ob ein Milchtier (50, 51) gemolken werden muss, das Bestimmen der Qualität der Vormilch umfasst, wobei das Milchtier mit dem Trennmelksystem (15) gemolken wird, wenn die Qualität der Vormilch ein vorbestimmtes Kriterium nicht erfüllt.

17. Verfahren nach einem der Ansprüche 13 bis 16, wobei der ortsveränderliche Teil (16) einen Verbindungsroboter (21) für Melkbecher (6, 18) aufweist und wobei das Verfahren das Wiederansetzen des einen oder der mehreren Melkbecher (6) oder des einen oder der mehreren Trenn-melkbecher (18) mittels des Verbindungsroboters des ortsveränderlichen Teils umfasst, falls dieser/diese sich zu früh von den Zitzen eines Milchtiers (50, 51) lösen.

## Revendications

1. Dispositif (1) destiné à traire des animaux laitiers, comprenant :
- un manège de traite rotatif (2) avec plusieurs postes de traite (3), chaque poste de traite ayant un ou plusieurs gobelets trayeurs (6),
- un système de traite principal destiné à traire un animal laitier avec le ou les gobelets trayeurs, comprenant un système de tuyaux à lait (7) qui relie le ou les gobelets trayeurs de chaque poste de traite à une cuve (8, 9) pour du lait destiné à la consommation,
le dispositif comprenant un système de lait à séparer (15) destiné à séparer du lait provenant d'un ou plusieurs animaux laitiers, ayant une partie déplaçable (16) qui est déplaçable par rapport au manège de traite afin de pouvoir coopérer avec plusieurs postes de traite et se déplacer avec un poste donné parmi les postes de traite tout en coopérant avec ledit poste donné parmi les postes de traite, la partie déplaçable comprenant un ou plusieurs gobelets trayeurs de séparation (18), qui peuvent être attachés à un ou plusieurs trayons d'un animal laitier (51) qui est situé dans le poste de traite ou au niveau de celui-ci, et le système de lait à séparer ayant un système d'évacuation distinct pour du lait à séparer (19), système par lequel du lait provenant du ou des gobelets trayeurs de séparation qui doit être séparé peut être transporté jusqu'à une cuve de lait à séparér (20), et le dispositif ayant un dispositif de contrôle (14) qui est configuré pour contrôler automatiquement un déplacement de la partie déplaçable,
**caractérisé en ce que** le dispositif est configuré pour :
- admettre ou placer un animal laitier (50, 51) au niveau d'un poste de traite (3) ou dans celui-ci ;
- déterminer si un animal laitier doit être trait en utilisant le système de traite principal ou le système de lait à séparer (15) ; et
- sur la base du résultat, traire l'animal laitier en utilisant le système de traite principal ou le système de lait à séparer, respectivement.

2. Dispositif (1) selon la revendication 1, dans lequel la partie déplaçable (16) est sur roues.

3. Dispositif (1) selon la revendication 2, dans lequel la partie déplaçable (16) est un véhicule mobile de façon autonome.

4. Dispositif (1) selon une des revendications précédentes, dans lequel le système de lait à séparer (15) comprend un moteur (26) qui peut être entraîné par le dispositif de contrôle (14), lequel moteur est conçu pour déplacer la partie déplaçable (16).

5. Dispositif (1) selon une des revendications précédentes, dans lequel la partie déplaçable (16) a un robot de raccordement (21) pour gobelets trayeurs.

6. Dispositif (1) selon une des revendications précédentes, dans lequel la partie déplaçable (16) est disposée sur un guide disposé de façon fixe (17), lequel guide s'étend sur une partie de la circonférence du manège (2).

7. Dispositif (1) selon une des revendications précédentes, dans lequel la partie déplaçable (16) du système de lait à séparer (15) a une cuve de lait à séparer dédiée (20).

8. Dispositif (1) selon une des revendications précédentes, dans lequel la partie déplaçable du système de lait à séparer (15) est reliée à une ou plusieurs cuves à lait stationnaires pour du lait à séparer.

9. Dispositif (1) selon une des revendications précédentes, le dispositif comprenant un robot de raccordement principal distinct disposé de façon fixe (10) destiné à placer le ou les gobelets trayeurs (6, 18) sur un ou plusieurs trayons d'un animal laitier qui est situé dans ou au niveau d'un des postes de traite.

10. Dispositif (1) selon la revendication précédente, dans lequel le robot de raccordement (21) de la partie déplaçable (16) est conçu pour attacher à la fois le ou les gobelets trayeurs de séparation (18) et le ou les gobelets trayeurs (6) aux trayons d'un animal laitier qui est situé dans ou au niveau d'un poste de traite (3).

11. Dispositif (1) selon une des revendications précédentes, le dispositif comprenant un fichier de données d'animaux et un système d'identification (13) destiné à identifier un animal laitier entrant dans le manège de traite (2), et le dispositif étant conçu pour décider, après identification de l'animal laitier au moyen du système d'identification, sur la base de données associées à l'animal laitier identifié, s'il faut traire l'animal laitier automatiquement en utilisant le système de traite principal ou le système de lait à séparer (15).

12. Dispositif selon une des revendications précédentes, comprenant en outre un dispositif de tirage des premiers jets distinct et un dispositif d'évaluation de la qualité des premiers jets (28) qui est conçu pour émettre un signal de qualité des premiers jets, et dans lequel le dispositif de contrôle (14) est conçu pour décider, sur la base du signal de qualité des premiers jets, de traire automatiquement l'animal laitier en utilisant le système de traite principal ou le système de lait à séparer (15).

13. Procédé de traite d'animaux laitiers utilisant un dispositif de traite selon une des revendications précédentes,
**caractérisé en ce que** le procédé comprend les étapes :
- admettre ou placer un animal laitier (50, 51) au niveau d'un poste de traite (3) ou dans celui-ci ;
- déterminer si un animal laitier doit être trait en utilisant le système de traite principal ou le système de lait à séparer (15) ; et
- sur la base du résultat, traire l'animal laitier en utilisant le système de traite principal ou le système de lait à séparer, respectivement.

14. Procédé selon la revendication 13, dans lequel, si un animal laitier (50, 51) doit être trait en utilisant le système de lait à séparer (15), la partie déplaçable (16) est automatiquement déplacée pendant la traite avec le poste de traite (3) dans lequel ou au niveau duquel est situé l'animal laitier à traire.

15. Procédé selon la revendication 13 ou 14, dans lequel l'étape consistant à déterminer si un animal laitier (50, 51) doit être trait en utilisant le système de traite principal ou le système de lait à séparer (15) comprend l'étape d'identification de l'animal laitier au moyen d'un système d'identification (13).

16. Procédé selon une des revendications 13 à 15, dans lequel l'étape consistant à déterminer si un animal laitier (50, 51) doit être trait comprend la détermination de la qualité des premiers jets, l'animal laitier étant trait en utilisant le système de lait à séparer (15) si la qualité des premiers jets ne respecte pas un critère prédéterminé.

17. Procédé selon une des revendications 13 à 16, la partie déplaçable (16) ayant un robot de raccordement (21) pour gobelets trayeurs (6, 18), et le procédé comprenant le rattachement du ou des gobelets trayeurs (6) ou du ou des gobelets trayeurs de séparation (18) au moyen du robot de raccordement de la partie déplaçable, s'il(s) est/sont détaché(s) trop tôt des trayons d'un animal laitier (50, 51).
